# EUROPEAN PATENT SPECIFICATION

(11) **EP 3 297 502 B1**
(45) Date of publication and mention of the grant of the patent: **28.11.2018**
(21) Application number: 16722968.1
(22) Date of filing: 21.04.2016
(51) Int. Cl.: A47J 31/18

(54) **A TURKISH COFFEE MACHINE**
MASCHINE FÜR TÜRKISCHEN KAFFEE
MACHINE À CAFÉ TURC

(30) Priority: 20.05.2015 TR 201506084
(43) Date of publication of application: 28.03.2018
(73) Proprietor: Arzum Elektrikli Ev Aletleri San. Ve Tic. A.S., 34050 Istanbul (TR)
(72) Inventor: ATILLA, Ersoy, Istanbul (TR)
(74) Representative: Kaya, Erdem
(86) International application number: PCT/TR2016/050120
(87) International publication number: WO 2016/186598

(56) References cited:
- WO-A1-2011/007266
- WO-A2-2013/139820
- CN-A- 103 070 612

## Description

### TECHNICAL FIELD

The present invention relates to Turkish coffee cooking and servicing machines wherein Turkish coffee is cooked and serviced.

### PRIOR ART

Today, Turkish coffee is made manually or automatically by means of various methods. The important criteria during cooking of the Turkish coffee are the correct adjustment of the Turkish coffee and the sugar, formation of foam in a firm manner and transfer of the foam to the cup in a firm manner and the occurrence of no overflow.

In the patent application TR2012/14652, a Turkish Coffee Cooking and Servicing System is disclosed. In said patent application, the servicing system is provided by means of a motor and a gear group. Due to the friction which occurs between the gear group; various noises occur and the piston defined in the system moves in a noisy manner. Since the gear group is made and mounted of more than one piece which needs sensitivity, the labor force consumption and the cost increase, and the production durations extend. Since there is a great number of pieces used in the system, the production and assembly durations increase. Moreover, the difficulty faced during assembly affects the production duration. The document WO 2013/139820 A1 discloses a further example of a Turkish coffee cooking and serving machine.

As a result, because of all of the abovementioned problems, an improvement is required in the related technical field.

### BRIEF DESCRIPTION OF THE INVENTION

The present invention relates to a Turkish coffee cooking and servicing machine, for eliminating the above mentioned disadvantages and for bringing new advantages to the related technical field.

The main object of the present invention is to provide a Turkish coffee cooking and servicing machine where noises occurring during operation are reduced.

Another object of the present invention is to provide a Turkish coffee cooking and servicing machine whose cost, production and assembly durations are reduced.

In order to realize all of the abovementioned objects and the objects which are to be deducted from the detailed description below, the present invention is a Turkish coffee cooking and servicing machine whose inner side is heated by means of a heater and having a cooking chamber wherein a coffee mixture including Turkish coffee, water and optionally sugar is cooked and having a pushing head defining the base of the cooking chamber and which moves vertically between at least one cooking position and a service position where the coffee mixture in the cooking chamber is raised to the level of the discharge outlet in order to transfer said coffee mixture, provided in the cooking chamber, to a beverage vessel through a discharge outlet for servicing when the cooking is completed. Accordingly, in order to move said pushing head between a cooking position and a servicing position, the subject matter Turkish coffee cooking and servicing machine is characterized by comprising at least one piston plate connected to the pushing head by means of a drive arm, at least one drive chamber wherein said piston plate is positioned in a movable manner, at least one pump which applies water through at least one lower hole and at least one upper hole into said drive chamber and thus which moves the pushing head, and at least one control unit which controls passage of water taken by said pump from the water depot and transferred to the drive chamber. Thus, in order to provide servicing of the cooked coffee, the pushing head moves in a silent manner between the cooking and servicing positions.

In a preferred embodiment of the subject matter invention, there is at least one first line providing water passage between the upper hole of the drive chamber and the water depot, and at least one fourth line providing water passage between the lower hole and the water depot.

In another preferred embodiment of the subject matter invention, there is at least one second line providing water passage between the upper hole of the drive chamber and the pump, and at least one third line for providing water passage between the lower hole and the pump.

In another preferred embodiment of the subject matter invention, there is at least one water feeding line extending between the pump and the cooking chamber.

In another preferred embodiment of the subject matter invention, the control unit comprises at least one control arm which can close and open the first line, the second line, the third line, the fourth line and the water feeding line.

In another preferred embodiment of the subject matter invention, in order to provide said control arm to open and close the first line, the second line, the third line, the fourth line and the water feeding line, there is at least one each control elements connected to each of the first line, the second line, the third line, the fourth line and the water feeding line.

In another preferred embodiment of the subject matter invention, the control elements are provided in the form of protrusions provided within a predetermined arrangement on the control arm.

In another preferred embodiment of the subject matter invention, the control arm is positioned in a substantially close manner on the first line, the second line, the third line, the fourth line and the water feeding line arranged side by side, and the control elements, provided on the control arm, open and close the first line, the second line, the third line, the fourth line and the water feeding line by means of the rotation of the control arm when desired.

In another preferred embodiment of the subject matter invention, at least the section of the first line, the second line, the third line, the fourth line and the water feeding line which is connected to the control arm is made of a substantially flexible material.

In another preferred embodiment of the subject matter invention, the control elements compress and elastically deform the first line, the second line, the third line, the fourth line and the water feeding line during the rotation of the control arm and the control elements block water passage.

In another preferred embodiment of the subject matter invention, there is at least one motor connected to the control arm.

The present invention is a Turkish coffee cooking and servicing method for a Turkish coffee cooking and servicing machine. Accordingly, there are the steps of:
- transferring water to the cooking chamber by the pump by opening the water feeding line by the control arm in the position where the pushing head is in the cooking position,
- cooking the coffee by the heater after addition of the Turkish coffee and optionally sugar,
- opening the first line and the third line and closing the second line and the fourth line by the control unit, and thereby transferring the water, received from the water depot by the pump, to the drive chamber through the lower hole, and bringing the pushing head to the service position by the drive arm.

In another preferred embodiment of the subject matter invention, there is the step of returning the pushing head to the cooking position as the control unit opens the second line and the fourth line and closes the first line, the third line and the water feeding line and as the pump transfers the water, received from the water depot, to the drive chamber through the upper hole.

In another preferred embodiment of the subject matter invention, there is the step of returning the water, provided on the piston plate in the drive chamber, to the water depot during the passage of the pushing head to the service position.

In another preferred embodiment of the subject matter invention, there is the step of returning the water, remaining under the piston plate in the drive chamber, to the water depot during the passage of the pushing head to the cooking position.

### BRIEF DESCRIPTION OF THE FIGURES

In Figure 1, a representative general view of the subject matter Turkish coffee cooking and servicing machine is given where said machine is in waiting position.
In Figure 2, a representative view of the control unit of the subject matter Turkish coffee cooking and servicing machine is given.
In Figure 3, a representative view of the subject matter Turkish coffee cooking and servicing machine during preparation prior to cooking and at the cooking position (i) is given.
In Figure 4, a representative view of the subject matter Turkish coffee cooking and servicing machine in the servicing position (ii) where coffee is serviced is given.
In Figure 5, a representative view of bringing the subject matter Turkish coffee cooking and servicing machine to the ready-to-use condition after the servicing process is given.
In Figure 6, another representative view of the control unit of the subject matter Turkish coffee cooking and servicing machine is given.

### REFERENCE NUMBERS

| | |
|---|---|
| 10 Cooking chamber | 30 Drive unit |
| 11 Discharge outlet | 40 Drive chamber |
| 12 Water feeding inlet | 41 Piston plate |
| 13 Pushing head | 42 Lower hole |
| 14 Drive arm | 43 Upper hole |
| 15 Heater | 50 Pump |
| | 60 Water depot |
| 20 Control unit | 71 First line |
| 21 Motor | 72 Second line |
| 22 Output shaft | 73 Third line |
| 23 Control arm | 74 Fourth line |
| 24 Control element | 75 Water feeding line |
| | i Cooking position |
| | ii Servicing position |

### THE DETAILED DESCRIPTION OF THE INVENTION

In this detailed description, the subject matter Turkish coffee cooking and servicing machine is explained with references to examples without forming any restrictive effect only in order to make the subject more understandable.

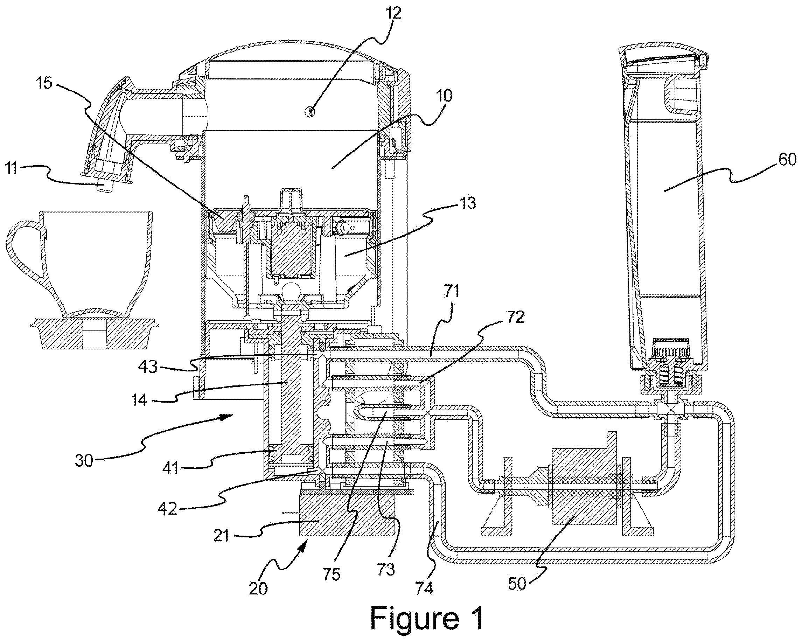

As can be seen in Figure 1, the subject matter Turkish coffee cooking machine has a cooking chamber (10) wherein coffee is cooked and afterwards serviced. There is at least one discharge outlet (11) provided preferably on the side wall of the cooking chamber (10). Moreover, again preferably there is at least one water feeding inlet (12) provided on the side wall of the cooking chamber (10). Said water feeding inlet (12) is connected to at least one water depot (60) by means of at least one pump (50) and at least one water feeding line (75). In the preferred embodiment of the present invention, the water feeding inlet (12) is provided at a higher level than the discharge outlet (11). Inside the cooking chamber (10), there is at least one pushing head (13) which defines the base of the cooking chamber (10). In order to provide vertical movement of said pushing head (13) inside the cooking chamber (10), there is at least one drive unit (30), and there is at least one control unit (20) in order to control said drive unit (30). There is at least one heater (15) in order to provide realization of the cooking process in the cooking chamber (10).

Said drive unit (30) comprises at least one drive chamber (40), and at least one pump (50) connected to said drive chamber (40), and said water depot (60). There is at least one piston plate (41) provided inside the drive chamber (40). Said piston plate (41) is connected to the pushing head (13) by means of at least one drive arm (14). The piston plate (41) is vertically movable inside the drive chamber (40). On the drive chamber (40), there is at least one lower hole (42) and at least one upper hole (43) on different sides of the piston plate (41). There is at least one first line (71) extending from said upper hole (43) to the water depot (60) and through which water passes. Moreover, there is at least one second line (72) extending from said upper hole (43) to the pump (50) and through which water passes. There is at least one third line (73) extending from said lower hole (42) to the pump (50) and through which water passes. Moreover, there is at least one fourth line (74) extending from the lower hole (42) to the water depot (60) and through which water passes. The first line (71) and the second line (72) preferably join at a region which is close to the drive chamber (40), and they are connected as a single line to the upper hole (43). In a similar manner, the third line (73) and the fourth line (74) preferably join at a region which is close to the drive chamber (40), and they are connected as a single line to the lower hole (42).

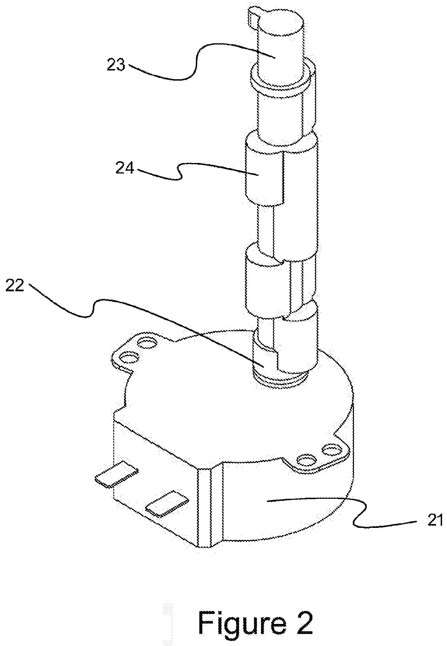

As can be seen in Figure 1 and 2, said control unit (20) is connected to the first line (71), the second line (72), the third line (73), the fourth line (74) and the water feeding line (75). The control unit (20) has at least one motor (21), and at least one control arm (23) connected to the motor (21) by means of an output shaft (22). Said control arm (23) is connected to the first line (71), the second line (72), the third line (73), the fourth line (74) and the water feeding line (75). Pluralities of control elements (24) are provided on the control arm (23). Each of said control elements (24) is connected to the first line (71), the second line (72), the third line (73), the fourth line (74) and the water feeding line (75). In the preferred embodiment of the present invention, the control elements (24) are arranged on the control arm (23) in a non-linear manner. Accordingly, during the rotation of the motor (21), the control elements (24) on the control arm (23) provide the first line (71), the second line (72), the third line (73), the fourth line (74) and the water feeding line (75) to be opened and closed depending on the rotation amount of the control arm (23).

In the light of said structural details, the operation manner of the subject matter Turkish coffee servicing machine is as follows.

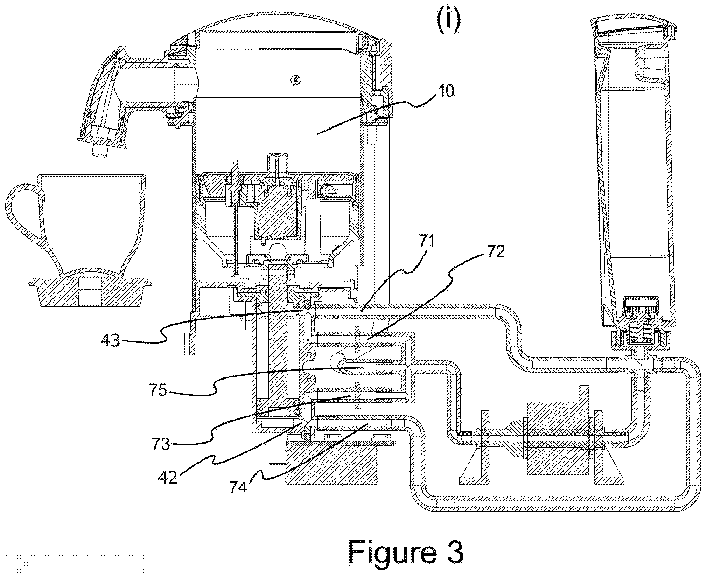

In the cooking position (i) shown in Figure 3, the preparations prior to the cooking process and the cooking process are realized. Accordingly, the pushing head (13), provided in the cooking chamber (10), is at the bottom position, and it is ready to take water into the cooking chamber (10). Meanwhile, the control arm (23) closes the first line (71), the second line (72), the third line (73) and the fourth line (74). In other words, only the water feeding line (75) is in open position. As the pump (50) is activated, the water, taken from the water depot (60), passes through the water feeding line (75) and through the water feeding inlet (12), and it enters into the cooking chamber (10). Afterwards, Turkish coffee is cooked inside the cooking chamber (10).

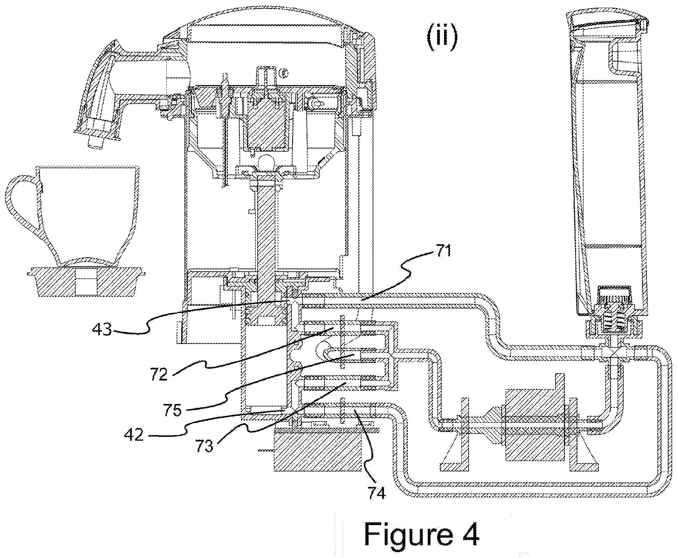

As the pushing head passes to the service position (ii) illustrated in Figure 4, the servicing process of the cooked Turkish coffee is realized. In order to provide this, the pushing head (13) moves vertically upwardly, and it pours the coffee outwardly through the discharge outlet (11). The vertical movement of the pushing head is provided by the drive unit (30). In more details, meanwhile, the control arm (23) rotates, and the first line (71) and the third line (73) are opened, and the second line (72) and the fourth line (74) are closed. Moreover, meanwhile, the water feeding line (75) is also closed. Thus, meanwhile, the water, applied by the pump (50), advances in the third line (73), and it enters into the drive chamber (40), and it pushes the piston plate (41) upwardly. The pushing head (13), connected to the piston plate (41) by means of the drive arm (14), moves upwardly simultaneously. Meanwhile, since the fourth line (74) is closed, the water, applied by the pump (50), is prevented from returning into the water depot (60). The water, entering into the drive chamber (40) through the lower hole (42), forces the piston plate (41) to move upwardly. By means of this, while the piston plate (41) moves upwardly, the water, provided on the upper side of the piston plate (41) in the drive chamber (40), exits the upper hole (43), and it advances to the water depot (60) through the first line (71). Moreover, since the second line (72) is closed meanwhile, water is prevented from being sent to the upper side of the piston plate (41) by the pump (50). Since the water feeding line (75) is closed, water is prevented from being sent to the cooking chamber (10).

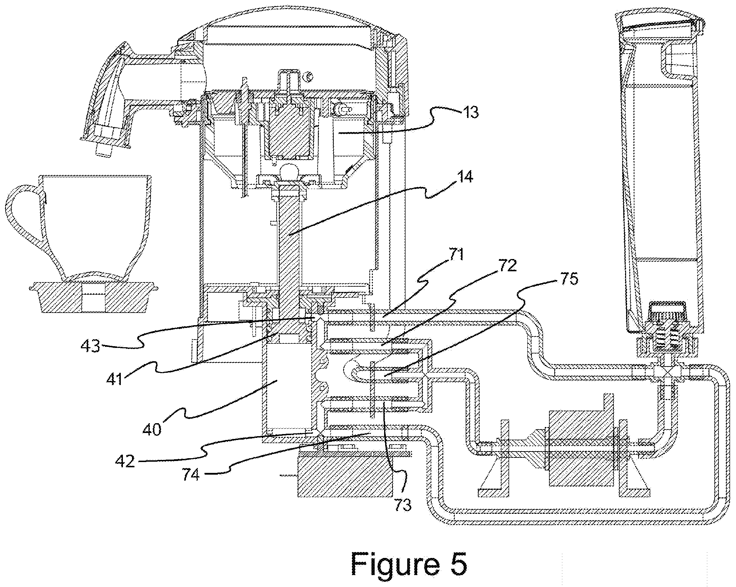

After the Turkish coffee is serviced, the pushing head (13) shall lower and arrive at the first position, and it shall be prepared again for a new cooking process. In order to provide this, as illustrated in Figure 5, the control arm (23) rotates further at a predetermined amount, and it opens the second line (72) and the fourth line (74). Moreover, it closes the first line (71), the third line (73) and the water feeding line (75). By means of this, the water, applied by the pump (50), passes through the second line (72), and it enters into the drive chamber (40) through the upper hole (43). Thus, the piston plate (41) is pushed downwardly. The pushing head (13) connected to the piston plate (41) by means of the drive arm (14) moves downwardly in a simultaneous manner. Meanwhile, the water, existing under the piston plate (41), returns to the water depot (60) through the fourth line (74). Since the third line (73) is closed, the water, applied by the pump (50), is prevented from arriving at the lower side of the piston plate (41). Moreover, since the first line (71) is closed, the water, applied by the pump (50), is prevented from reaching the water depot (60). Since the water feeding line (75) is closed, water is prevented from reaching the cooking chamber (10).

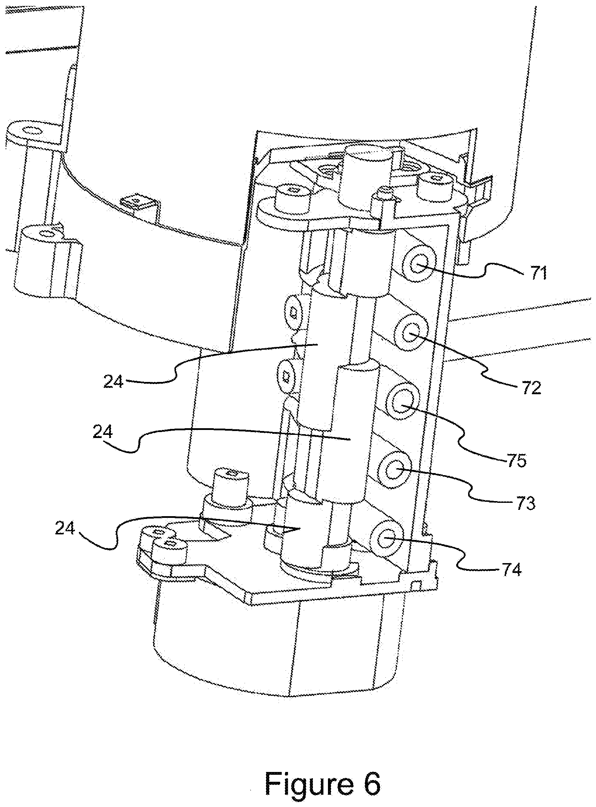

As can be seen in Figure 6, in the preferred embodiment of the present invention, the first line (71), the second line (72), the third line (73), the fourth line (74) and the water feeding line (75) are made of pipes which can change shape elastically as a result of the forces exerted thereon. Thus, when the forces exerted thereon are removed, they return to their prior forms. By means of said embodiment, during the rotation of the control arm (23), the control elements (24), provided preferably in protrusion form on said control arm (23), exert pressure on the first line (71), the second line (72), the third line (73), the fourth line (74) and the water feeding line (75), and said control elements (24) close said lines (71, 72, 73, 74, 75) in a manner preventing water passage through them. By means of the non-linear distribution of the control elements (24) on the control arm (23), different lines can be open or closed at different times during the rotation of the control arm (23).

On the control arm (23), there is a linear space section where the control elements (24) do not exist. When said linear space section of the control arm (23) corresponds to the lines, no pressure is formed. In other words, the first line (71), the second line (72), the third line (73), the fourth line (74) and the water feeding line (75) are in open condition. As can be seen in Figure 1, this position of the control arm (23) is defined as a waiting position. Thus, since there is no force on the pipes in this position, they are prevented from being deformed in times when the machine is not used. Moreover, the pump (50) is closed before they arrive at this position, and the pump (50) stops applying water. By means of this, uncontrolled water application is prevented.

By means of this whole embodiment, the vertical movement of the pushing head (13) is provided by a hydraulic drive unit (30). By means of this, there remains no need to use linear movement systems (screwed shaft, etc.) for providing said movement. Thanks to this, the Turkish coffee cooking and servicing machine can operate in a more silent manner.

By means of this whole embodiment, in the present art, there remains no need to use the gear group which is the movement transfer element.

Moreover, there remains no need to use the power supply unit which had to be used together with the motor & gear group which is used as the movement source. This means that the costs are reduced.

On the other hand, since the pump (50), used as the drive source, is used in the present art, the need for using additional piece is eliminated.

The protection scope of the present invention is set forth in the annexed Claims and cannot be restricted to the illustrative disclosures given above, under the detailed description. It is because a person skilled in the relevant art can obviously produce similar embodiments under the light of the foregoing disclosures, without departing from the scope of the present invention.

## Claims

1. A Turkish coffee cooking and servicing machine whose inner side is heated by means of a heater (15) and having a cooking chamber (10) wherein a coffee mixture including Turkish coffee, water and optionally sugar is cooked and having a pushing head (13) defining the base of the cooking chamber (10) and which moves vertically between at least one cooking position (i) and a service position (ii) where the coffee mixture in the cooking chamber (10) is raised to the level of the discharge outlet (11) in order to transfer said coffee mixture, provided in the cooking chamber (10), to a beverage vessel through a discharge outlet (11) for servicing when the cooking is completed, the subject matter Turkish coffee cooking and servicing machine is **characterized by** comprising at least one piston plate (41) connected to the pushing head (13) by means of a drive arm (14), at least one drive chamber (40) wherein said piston plate (41) is positioned in a movable manner, at least one pump (50) which applies water through at least one lower hole (42) and at least one upper hole (43) into said drive chamber (40) and thus which moves the pushing head (13), and at least one control unit (20) which controls passage of water taken by said pump (50) from the water depot (60) and transferred to the drive chamber (40).

2. A Turkish coffee cooking and servicing machine according to Claim 1, **characterized by** comprising at least one first line (71) providing water passage between the upper hole (43) of the drive chamber (40) and the water depot (60), and at least one fourth line (74) providing water passage between the lower hole (42) and the water depot (60).

3. A Turkish coffee cooking and servicing machine according to Claim 1, **characterized by** comprising at least one second line (72) providing water passage between the upper hole (43) of the drive chamber (40) and the pump (50), and at least one third line (73) for providing water passage between the lower hole (42) and the pump (50).

4. A Turkish coffee cooking and servicing machine according to Claim 1, **characterized by** comprising at least one water feeding line (75) extending between the pump (50) and the cooking chamber (10).

5. A Turkish coffee cooking and servicing machine according to claims 2 to 4, **characterized in that** the control unit (20) comprises at least one control arm (23) which can close and open the first line (71), the second line (72), the third line (73), the fourth line (74) and the water feeding line (75).

6. A Turkish coffee cooking and servicing machine according to Claim 5, **characterized in that** in order to provide said control arm (23) to open and close the first line (71), the second line (72), the third line (73), the fourth line (74) and the water feeding line (75), there is at least one each control elements (24) connected to each of the first line (71), the second line (72), the third line (73), the fourth line (74) and the water feeding line (75).

7. A Turkish coffee cooking and servicing machine according to Claim 6, **characterized in that** the control elements (24) are provided in the form of protrusions provided within a predetermined arrangement on the control arm (23).

8. A Turkish coffee cooking and servicing machine according to Claim 7, **characterized in that** the control arm (23) is positioned in a substantially close manner on the first line (71), the second line (72), the third line (73), the fourth line (74) and the water feeding line (75) arranged side by side, and the control elements (24), provided on the control arm (23), open and close the first line (71), the second line (72), the third line (73), the fourth line (74) and the water feeding line (75) by means of the rotation of the control arm (23) when desired.

9. A Turkish coffee cooking and servicing machine according to any one of the claims between Claim 5 and 8, **characterized in that** at least the section of the first line (71), the second line (72), the third line (73), the fourth line (74) and the water feeding line (75) which is connected to the control arm (23) is made of a substantially flexible material.

10. A Turkish coffee cooking and servicing machine according to Claim 9, **characterized in that** the control elements (24) compress and elastically deform the first line (71), the second line (72), the third line (73), the fourth line (74) and the water feeding line (75) during the rotation of the control arm (23) and the control elements (24) block water passage.

11. A Turkish coffee cooking and servicing machine according to Claim 10, **characterized by** comprising at least one motor (21) connected to the control arm (23).

12. A Turkish coffee cooking and servicing method for a Turkish coffee cooking and servicing machine according to claims 1 to 4, **characterized by** comprising the steps of:
- transferring water to the cooking chamber (10) by the pump (50) by opening the water feeding line (75) by the control arm (23) in the position where the pushing head (13) is in the cooking position (i),
- cooking the coffee by the heater (15) after addition of the Turkish coffee and optionally sugar,
- opening the first line (71) and the third line (73) and closing the second line (72) and the fourth line (74) by the control unit (20), and thereby transferring the water, received from the water depot (60) by the pump (50), to the drive chamber (40) through the lower hole (42), and bringing the pushing head (13) to the service position (ii) by the drive arm (14).

13. A Turkish coffee cooking and servicing method according to Claim 12, **characterized by** comprising the step of returning the pushing head (13) to the cooking position (i) as the control unit (20) opens the second line (72) and the fourth line (74) and closes the first line (71), the third line (73) and the water feeding line (75) and as the pump (50) transfers the water, received from the water depot (60), to the drive chamber (40) through the upper hole (43).

14. A Turkish coffee cooking and servicing method according to Claim 12, **characterized by** comprising the step of returning the water, provided on the piston plate (41) in the drive chamber (40), to the water depot (60) during the passage of the pushing head (13) to the service position (ii).

15. A Turkish coffee cooking and servicing method according to Claim 13, **characterized by** comprising the step of returning the water, remaining under the piston plate (41) in the drive chamber (40), to the water depot (60) during the passage of the pushing head (13) to the cooking position (i).

## Patentansprüche

1. Türkische Kaffee- Koch- und Serviermaschine, deren Innenseite mittels einer Heizvorrichtung (15) erhitzt wird und eine Kochkammer (10) aufweist, in der eine Kaffeemischung, die türkischen Kaffee, Wasser und gegebenenfalls Zucker enthält, gekocht wird und einen Schiebekopf (13) aufweist, der die Basis der Kochkammer (10) definiert und der sich vertikal zwischen mindestens einer Kochposition (i) und einer Servierposition (ii) bewegt, wo die Kaffeemischung in der Kochkammer (10) auf das Niveau des Abgabeauslasses (11) angehoben wird, um die in der Kochkammer (10) bereitgestellte Kaffeemischung zu einem Getränkebehälter durch einen Abgabeauslass (11) zum Servieren zu übertragen, wenn das Kochen beendet ist, der Gegenstand der Erfindung ist eine Koch- und Serviermaschine für türkischen Kaffee, **dadurch gekennzeichnet, dass** sie mindestens eine Kolbenplatte (41) umfasst, die mit dem Schiebekopf (13) mittels eines Antriebsarms (14) verbunden ist, mindestens eine Antriebskammer (40) umfasst, in der die Kolbenplatte (41) beweglich angeordnet ist, mindestens eine Pumpe (50) umfasst, die Wasser durch mindestens ein unteres Loch (42) und mindestens ein oberes Loch (43) in die Antriebskammer (40) einbringt und somit den Schiebekopf (13) bewegt, und mindestens eine Steuereinheit (20) umfasst, die den Durchgang des von der Pumpe (50) entnommenen Wassers aus dem Wasserdepot (60) steuert und in die Antriebskammer (40) überführt.

2. Türkische Kaffee- Koch- und Serviermaschine, nach Anspruch 1, **dadurch gekennzeichnet, dass** sie mindestens eine erste Leitung (71) umfasst, die einen Wasserdurchgang zwischen dem oberen Loch (43) der Antriebskammer (40) und dem Wasserdepot (60) bereitstellt, und mindestens eine vierte Leitung (74) umfasst, die einen Wasserdurchgang zwischen dem unteren Loch (42) und dem Wasserdepot (60) bereitstellt.

3. Türkische Kaffee- Koch- und Serviermaschine, nach Anspruch 1, **dadurch gekennzeichnet, dass** sie mindestens eine zweite Leitung (72) umfasst, die einen Wasserdurchgang zwischen dem oberen Loch (43) der Antriebskammer (40) und der Pumpe (50) bereitstellt, und mindestens eine dritte Leitung (73) umfasst, die einen Wasserdurchgang zwischen dem unteren Loch (42) und der Pumpe (50) bereitstellt.

4. Türkische Kaffee- Koch- und Serviermaschine nach Anspruch 1, **dadurch gekennzeichnet, dass** sie mindestens eine Wasserzuführleitung (75) umfasst, die sich zwischen der Pumpe (50) und der Kochkammer (10) erstreckt.

5. Türkische Kaffee- Koch- und Serviermaschine nach den Ansprüchen 2 bis 4, **dadurch gekennzeichnet, dass** die Steuereinheit (20) mindestens einen Steuerarm (23) umfasst, der die erste Leitung (71), die zweite Leitung (72), die dritte Leitung (73), die vierte Leitung (74) und die Wasserzuführleitung (75) schließen und öffnen kann.

6. Türkische Kaffee- Koch- und Serviermaschine nach Anspruch 5, **dadurch gekennzeichnet, dass**, damit Steuerarm (23) die erste Leitung (71), die zweite Leitung (72), die dritte Leitung (73), die vierte Leitung (74) und die Wasserzuführleitung (75) öffnen und schließen kann, mindestens ein jedes Steuerelement (24) mit jeder der ersten Leitung (71), der zweiten Leitung (72), der dritten Leitung (73), der vierten Leitung (74) und der Wasserzuführleitung (75) verbunden ist.

7. Türkische Kaffee- Koch- und Serviermaschine nach Anspruch 6, **dadurch gekennzeichnet, dass** die Steuerelemente (24) in Form von Vorsprüngen vorgesehen sind, die innerhalb einer vorbestimmten Anordnung am Steuerarm (23) vorgesehen sind.

8. Türkische Kaffee- Koch- und Serviermaschine nach Anspruch 7, **dadurch gekennzeichnet, dass** der Steuerarm (23) im wesentlichen nahe bei der ersten Leitung (71), der zweiten Leitung (72), der dritten Leitung (73) angeordnet ist, die vierte Leitung (74) und die Wasserzuführleitung (75) nebeneinander angeordnet sind und die Steuerelemente (24), die an dem Steuerarm (23) vorgesehen sind, die erste Leitung (71), die zweite Leitung (72), die dritte Leitung (73), die vierte Leitung (74) und die Wasserzuführleitung (75) mittels der Drehung des Steuerarms (23) öffnen und schließen, wenn dies erwünscht ist.

9. Türkische Kaffee- Koch- und Serviermaschine nach einem der Ansprüche zwischen Anspruch 5 und 8, **dadurch gekennzeichnet, dass** mindestens der Abschnitt der ersten Leitung (71), der zweiten Leitung (72), der dritten Leitung (73), der vierten Leitung (74) und der Wasserzuführleitung (75) mit dem Steuerarm (23) verbunden sind ist aus einem im wesentlichen flexiblen Material hergestellt sind .

10. Türkische Kaffee- Koch- und Serviermaschine nach Anspruch 9, **dadurch gekennzeichnet, dass** die Steuerelemente (24) die erste Leitung (71), die zweite Leitung (72), die dritte Leitung (73), die vierte Leitung (74) und die Wasserzuführleitung (75) während der Drehung des Steuerarms (23) komprimieren und elastisch verformen und die Steuerelemente (24) den Wasserdurchgang blockieren.

11. Türkische Kaffee- Koch- und Serviermaschine nach Anspruch 10, **dadurch gekennzeichnet, dass** sie mindestens einen Motor (21) umfasst, der mit dem Steuerarm (23) verbunden ist.

12. Türkisches Kaffee- Koch- und Servierverfahren für eine türkische Kaffee- Koch- und Serviermaschine nach Anspruch 1 bis 4, **dadurch gekennzeichnet, dass** es die Schritte umfasst:
- Überführen von Wasser in die Kochkammer (10) durch die Pumpe (50) durch Öffnen der Wasserzuführleitung (75) durch den Steuerarm (23) in der Position, in der sich der Schiebekopf (13) in der Kochposition befindet (i),
- Kochen des Kaffees mit der Heizvorrichtung (15) nach Zugabe des türkischen Kaffees und gegebenenfalls Zucker,
- Öffnen der ersten Leitung (71) und der dritten Leitung (73) und Schließen der zweiten Leitung (72) und der vierten Leitung (74) durch die Steuereinheit (20), und dadurch Übertragen des Wassers, das von dem Wasserdepot (60) durch die Pumpe (50) empfangen wird, zu der Antriebskammer (40) durch das untere Loch (42) und Bringen des Schiebekopfs (13) in die Servierposition (ii) durch den Antriebsarm (14).

13. Türkisches Kaffee- Koch- und Servierverfahren nach Anspruch 12, **gekennzeichnet durch** den Schritt des Zurückführens des Schiebekopfs (13) in die Kochposition (i), wenn die Steuereinheit (20) die zweite Leitung (72) und die vierte Leitung (74) öffnet und die erste Leitung (71), die dritte Leitung (73) und die Wasserzuführungsleitung (75) schließt und wenn die Pumpe (50) das von dem Wasserdepot (60) empfangene Wasser zu der Antriebskammer (40) durch das obere Loch (43) überträgt.

14. Türkisches Kaffee- Koch- und Servierverfahren nach Anspruch 12, **gekennzeichnet durch** den Schritt des Zurückführens des Wassers, das an der Kolbenplatte (41) in der Antriebskammer (40) vorgesehen ist, zu dem Wasserdepot (60) während des Durchgangs des Schiebekopfs (13) in die Servierposition (ii).

15. Türkisches Kaffee- Koch- und Servierverfahren nach Anspruch 13, **gekennzeichnet durch** den Schritt des Zurückführens des Wassers, das unter der Kolbenplatte (41) in der Antriebskammer (40) verbleibt, zu dem Wasserdepot (60) während des Durchgangs des Schiebekopfs (13) in die Kochposition (i).

## Revendications

1. Machine de préparation et de service de café Turc dont le côté intérieur est chauffé au moyen d'un dispositif de chauffage (15) et comportant une chambre de cuisson (10) dans laquelle un mélange de café comprenant du café Turc, de l'eau et éventuellement du sucre est cuit et ayant une tête de poussée (13) définissant la base de la chambre de cuisson (10) et qui se déplace verticalement entre au moins une position de cuisson (i) et une position de service (ii) où le mélange de café dans la chambre de cuisson (10) est élevé au niveau de la sortie de décharge (11) afin de transférer ledit mélange de café, fourni dans la chambre de cuisson (10), à un récipient de boisson par un orifice d'évacuation (11) pour servir le café lorsque la cuisson est finie, la machine à faire et servir du café Turc est **caractérisée en ce qu'**il comprend au moins un plateau de piston (41) relié à la tête de poussée (13) au moyen d'un bras d'entraînement (14), au moins une chambre d'entraînement (40) dans laquelle ladite plaque de piston (41) est déplacée grâce à une pompe (50) dont l'application coule de l'eau à travers au moins un trou inférieur (42) et au moins un trou supérieur (43) dans ladite chambre d'entraînement (40) et déplace ainsi la tête de poussée (13) et au moins une unité de commande (20) d'eau prélevée par ladite pompe (50) dans le dépôt d'eau (60) et transférée dans la chambre d'entraînement (40).

2. Machine de préparation et de service de café Turc selon la revendication 1, **caractérisé en ce qu'**il comprend au moins une première conduite (71) assurant le passage de l'eau entre le trou supérieur (43) de la chambre d'entraînement (40) et le réservoir d'eau (60), et au moins une quatrième conduite (74) assurant le passage de l'eau entre le trou inférieur (42) et le réservoir d'eau (60).

3. Machine de préparation et de service de café Turc selon la revendication 1, **caractérisé en ce qu'**il comprend au moins une seconde conduite (72) assurant le passage de l'eau entre le trou supérieur (43) de la chambre d'entraînement (40) et la pompe (50) et au moins un troisième conduit (73) pour assurer le passage de l'eau entre le trou inférieur (42) et la pompe (50).

4. Machine de préparation et de service de café Turc selon la revendication 1, **caractérisé en ce qu'**il comprend au moins une conduite d'alimentation en eau (75) se prolongeant entre la pompe (50) et la chambre de cuisson (10).

5. Machine de préparation et de service de café Turc selon les revendications 2 à 4, **caractérisée en ce que** l'unité de commande (20) comprend au moins un bras de commande (23) pouvant fermer et ouvrir la première conduite (71), la deuxième conduite (72), la troisième conduite (73), la quatrième conduite (74) et la conduite d'alimentation en eau (75).

6. Machine de préparation et de service de café Turc selon la revendication 5, **caractérisé en ce que** pour fournir ledit bras de commande (23) afin d'ouvrir et de fermer la première conduite (71), la deuxième conduite (72), la troisième conduite (73), la quatrième conduite (74) et la conduite d'alimentation en eau (75), il se trouve au moins un élément de commande (24) qui est connecté à chacune des première (71), deuxième (72), troisième (73), quatrième conduite (74) et la conduite d'alimentation en eau (75).

7. Machine de préparation et de service de café Turc selon la revendication 6, **caractérisé en ce que** les éléments de commande (24) sont fournis sous la forme de protubérance prévues dans un arrangement prédéterminé sur le bras de commande (23).

8. Machine de préparation et de service de café Turc selon la revendication 7, **caractérisé en ce que** le bras de commande (23) est positionné de façon sensiblement proche sur la première conduite (71), la deuxième conduite (72), la troisième conduite (73), la quatrième conduite (74) et la conduite d'alimentation en eau (75) étant disposées côte à côte, et les éléments de commande (24) étant prévus sur le bras de commande (23) ouvrent et ferment la première conduite (71), la deuxième conduite (72), la troisième conduite (73), la quatrième conduite (74) et la conduite d'alimentation en eau (75) au moyen de la rotation du bras de commande (23) lorsque cela est désirée.

9. Machine de préparation et de service de café Turc selon l'une quelconque des revendications 5 et 8, **caractérisée en ce qu'**au moins la section de la première conduite (71), de la deuxième conduite (72), de la troisième conduite (73), de la quatrième conduite (74) et de la conduite d'alimentation en eau (75) étant connectée au bras de commande (23), sont constituées d'un matériau substantiellement flexible.

10. Machine de préparation et de service de café Turc selon la revendication 9, **caractérisé en ce que** les éléments de commande (24) compriment et déforment élastiquement la première conduite (71), la deuxième conduite (72), la troisième conduite (73), la quatrième conduite (74) et la conduite d'alimentation en eau (75) durant la rotation du bras de commande (23) et les éléments de commande (24) bloquent le passage de l'eau.

11. Machine de préparation et de service de café Turc selon la revendication 10, **caractérisé en ce qu'**il comprend au moins un moteur (21) connecté au bras de commande (23).

12. Procédé de préparation et de service de café Turc pour une machine de préparation et de service de café Turc selon les revendications de 1 à 4, **caractérisé en ce qu'**il comprend les étapes consistant à:
- transférer de l'eau vers la chambre de cuisson (10) par la pompe (50) en ouvrant la conduite d'alimentation en eau (75) par le bras de commande (23) dans la position où la tête de poussée (13) est dans la position de cuisson (i),
- préparer du café par le dispositif de chauffage (15) après l'ajout du café Turc et optionnellement du sucre,
- ouvrir la première conduite (71) et la troisième conduite (73) et fermer la deuxième conduite (72) et la quatrième conduite (74) par l'unité de commande (20) et transférer ainsi l'eau reçue du dépôt d'eau (60) par la pompe (50) à la chambre d'entraînement (40) à travers le trou inférieur (42) et amener la tête de poussée (13) à la position de service (ii) par le bras d'entraînement (14).

13. Procédé de préparation et de service de café Turc selon la revendication 12, **caractérisé en ce qu'**il comprend l'étape consistant à ramener la tête de poussée (13) dans la position de cuisson (i) lorsque l'unité de commande (20) ouvre la deuxième conduite (72) et la quatrième conduite (74) et ferme la première conduite (71), la troisième conduite (73) et la conduite d'alimentation en eau (75), alors que la pompe (50) transfère l'eau reçue du réservoir d'eau (60) vers la chambre d'entraînement (40) à travers le trou supérieur (43).

14. Procédé de préparation et de service de café Turc selon la revendication 12, **caractérisé en ce qu'**il comprend l'étape consistant à renvoyer l'eau qui est placée sur la plaque de piston (41) dans la chambre d'entraînement (40), vers la réserve d'eau (60) pendant le passage de la tête de poussée (13) en position de service (ii).

15. Procédé de préparation et de service de café Turc selon la revendication 13, **caractérisé en ce qu'**il comprend l'étape consistant à renvoyer l'eau restant sous la plaque de piston (41) dans la chambre d'entraînement (40), dans le réservoir d'eau (60) pendant le passage de la tête de poussée (13) en position de cuisson (i).
